# EUROPÄISCHE PATENTANMELDUNG

(11) **EP 2 500 528 A1**
(43) Veröffentlichungstag der Anmeldung: **19.09.2012**
(21) Anmeldenummer: 11158457.9
(22) Anmeldetag: 16.03.2011
(51) Int. Cl.: F01D 25/26, F02C 7/18, F01D 11/24, F01D 25/12

(54) **Verfahren zur Radialspalteinstellung einer Axialturbomaschine und Axialturbomaschine**

(71) Anmelder: SIEMENS AKTIENGESELLSCHAFT, 80333 München (DE)
(72) Erfinder: Sieber, Uwe, 45476 Mülheim an der Ruhr (DE); Butzeck, Christopher, 45481 Mülheim (DE)

(57) **Zusammenfassung**

Die Erfindung betrifft eine Vorrichtung und ein Verfahren zur Radialspalteinstellung zwischen den Spitzen von Schaufeln eines Schaufelkranzes und einer diesen gegenüberliegenden kreisförmigen Strömungspfadbegrenzung (20) in einer Axialturbomaschine (10), wobei an einer dem Strömungspfad abgewandten Seite (30) der Strömungspfadbegrenzung (20) ein unmittelbar daran angrenzender ringförmiger Seitenraum (32) angesiedelt ist. Um eine raumsparende Konstruktion zur wirkungsgradsteigernden Radialspalteinstellung zu erhalten, ist erfindungsgemäß vorgesehen, dass während des Betriebs der Axialturbomaschine (10) zur Beeinflussung der thermischen Dehnung der Strömungspfadbegrenzung (20) dem Seitenraum (32) ein flüssiges Medium zugeführt wird, welches aufgrund der im Strömungspfad auftretenden Temperaturen zumindest teilweise verdampft.

## Beschreibung

Die Erfindung betrifft ein Verfahren zur Radialspalteinstellung zwischen den freistehenden Spitzen von Schaufeln eines Schaufelkranzes und einer diesen gegenüberliegenden kreisförmigen Strömungspfadbegrenzung in einer Axialturbomaschine, wobei an einer dem Strömungspfad abgewandten Seite der Strömungspfadbegrenzung ein unmittelbar daran angrenzender ringförmiger Seitenraum angesiedelt ist. Weiter betrifft die Erfindung eine Axialturbomaschine mit einem sich in Axialrichtung erstreckenden Strömungspfad, in dem Spitzen von freistehenden Schaufeln eines Schaufelkranzes jeweils radialspaltbildend einer kreisförmigen Strömungspfadbegrenzung gegenüberliegen, wobei an einer dem Strömungspfad abgewandten Seite der Strömungspfadbegrenzung ein unmittelbar daran angrenzender ringförmiger Seitenraum angesiedelt ist.

Gattungsgemäße Axialturbomaschinen sind aus dem umfangreichen Stand der Technik in vielfältiger Art und Weise bekannt. Heutzutage sind beispielsweise zur Energieerzeugung eingesetzte Gasturbinen als Axialturbomaschinen ausgestaltet. Zumeist sind sowohl deren Verdichter als auch deren Turbineneinheit als Axialturbomaschine konzipiert. Die Gasturbine weist in ihrem Inneren einen Strömungspfad auf, in dem ein Medium geführt wird. Im Verdichter ist der Strömungspfad in Strömungsrichtung konvergierend, wobei die Beschaufelung der Axialturbomaschine dem Strömungsmedium Energie zuführt. In der Turbineneinheit der Gasturbine ist der Strömungskanal in Strömungsrichtung divergierend, hier entspannt sich das Strömungsmedium an den Turbinenschaufeln arbeitsleistend. Um einen besonders effizienten Betrieb der Axialturbomaschine sicherzustellen, ist es längstens bekannt, die Radialspalte zwischen den freistehenden Spitzen der Schaufeln und der dieser unmittelbar gegenüberliegenden, im Querschnitt kreisförmigen Wand so klein wie möglich zu halten. Gleichzeitig besteht das Bestreben, ein Anstreifen von den sich relativ zur Wand bewegenden Schaufeln an dieser Wand zu vermeiden, um die Lebensdauer nicht zu verkürzen.

Im Betrieb der axial durchströmten Gasturbine heizen sich aufgrund der unterschiedlichen Materialien, Volumen und Oberflächengrößen die einzelnen Bauteile und Komponenten unterschiedlich schnell auf. So erwärmt und dehnt sich z.B. im Verdichter die gehäuseseitige Strömungspfadbegrenzung schneller als die nabenseitige, welche vom Rotor des Verdichters gebildet ist. Um so in bestimmten Betriebszuständen ein Anstreifen oder Berühren der verschiedenen Komponenten zu vermeiden, müssen die weiter oben bezeichneten Radialspalte zwischen rotierenden und stationären Teilen mit einem Mindestmaß vorgehalten werden. Derartige Radialspalte führen jedoch im Betrieb zu Strömungsverlusten, die den Gesamtwirkungsgrad der Gasturbine verringern. Zudem führen die Radialspalte bei Verdichtern auch zu einem eingeschränkten Betriebsverhalten, da der Pumpgrenzabstand mit zunehmender Spaltgröße sich verkleinert.

Aufgabe der Erfindung ist daher die Bereitstellung eines Verfahrens zur Radialspalteinstellung zwischen den freistehenden Spitzen von Schaufeln eines Schaufelkranzes und einer diesen gegenüberliegenden kreisförmigen Strömungspfadbegrenzung einer Axialturbomaschine, mittels dem besonders einfach, zuverlässig und in kleinbauender Weise der Radialspalt eingestellt werden kann. Weitere Aufgabe der Erfindung ist die Bereitstellung einer entsprechenden Axialturbomaschine.

Die auf das Verfahren gerichtete Aufgabe wird mit einem Verfahren gemäß den Merkmalen des Anspruchs 1 gelöst. In Bezug auf die Axialturbomaschine wird die darauf gerichtete Aufgabe mit einer solchen gelöst, welche gemäß den Merkmalen des Anspruchs 6 ausgestaltet ist. Sowohl für das erfindungsgemäße Verfahren als auch für die erfindungsgemäße Axialturbomaschine sind vorteilhafte Ausgestaltungen in den jeweiligen Unteransprüchen angegeben, welche in beliebiger Weise auch untereinander kombiniert werden können.

Erfindungsgemäß ist vorgesehen, dass während des Betriebs der Axialturbomaschine zur radialspalteinstellenden Beeinflussung der thermischen Dehnung der Strömungspfadbegrenzung dem Seitenraum ein flüssiges Medium zugeführt wird, welches aufgrund der darin auftretenden Temperaturen zumindest teilweise verdampft. Es tritt also eine Phasenumwandlung im Seitenraum auf. Erfindungsgemäß wird somit die Verdampfungsenthalpie der Flüssigkeit zur radialspalteinstellenden Kühlung genutzt, wodurch mit besonders einfachen Mitteln eine besonders große Menge an Wärmeenergie der Strömungspfadbegrenzung entnommen werden kann. Im stationären Betrieb kann somit dauerhaft die kreisförmige Strömungspfadbegrenzung eine geringere Materialtemperatur als bisher aufweisen und dementsprechend eine geringere thermische Dehnung. Die geringere thermische Dehnung führt dazu, dass die Strömungspfadbegrenzung einen kleineren Durchmesser aufweist als ohne die vorgeschlagene Kühlung. Durch den kleineren Durchmesser vermindern sich die Spaltgrößen zwischen den freien Schaufelblattenden und der Strömungspfadbegrenzung. Dies führt einerseits dazu, dass geringere Strömungsverluste in Form von Spaltverlusten beim Betrieb der Axialturbomaschine entstehen. Folglich kann der Gesamtwirkungsgrad der Strömungsmaschine erhöht werden. Zudem verbessert sich das Betriebsverhalten einer Axialturbomaschine in Bezug auf den Pumpgrenzabstand, wenn diese als Verdichter ausgestattet ist.

Die Nutzung der Verdampfungskälte der Flüssigkeit ermöglicht zudem eine kompakte Konstruktion.

Gemäß einer ersten vorteilhaften Ausgestaltung wird die dem Seitenraum zugeführte Menge an flüssigem Medium je Zeiteinheit von einer Regeleinrichtung zur Einstellung eines Spalt-Sollwerts geregelt. Dies reduziert erhöhten Instrumentierungsaufwand, da bei der angewandten Regelung selber nicht das Spaltmaß erfasst und geregelt wird, sondern nur auf ein theoretisch einzuhaltendes Spaltmaß abgezielt wird, dessen Wert anhand eines Testbetriebs und/oder langjähriger Erfahrung sowie auch von computergestützten Konstruktionsverfahren bestimmt werden kann.

Je nach Zielsetzung besteht die Möglichkeit, unterschiedliche Ausgestaltungen zur Nutzung des so entstandenen Dampfes anzuwenden. Einerseits ist es möglich, dass der Dampf aus dem Seitenraum ausgeleitet und in dem Strömungspfad eingeleitet wird. Wenn der durch die Verdampfung der Flüssigkeit erzeugte Dampf dem Strömungsmedium, also dem Strömungspfad zugeführt wird, führt dies - sofern dieser als Verdichter ausgebildet ist - zum einen zu einer Kühlung des Hauptströmungsmediums und dadurch zu einer Erhöhung des Wirkungsgrads des Verdichterwirkungsgrads. Zum anderen führt diese Maßnahme zur Erhöhung des Gesamtmassenstroms. Beides hat einen positiven Effekt auf die umgesetzte Leistung. In diesem Fall sollten dann im Strömungspfad Schaufelprofile eingesetzt werden, welche in Bezug auf den erhöhten Massenstrom und Wirkungsgrad unter Berücksichtigung eines besonders breiten Anwendungsbereichs optimiert sind. Alternativ dazu ist es möglich, dass der aus dem Seitenraum ausgeleitete Dampf einer Entspannungseinheit zugeführt wird. In der Entspannungseinheit, welche beispielsweise als Entspannungsturbine ausgestaltet sein kann, kann dem im Seitenraum entstandenen Dampf die dort zugeführte Energie entnommen und als Nutzenergie weiterverwendet werden. Eine weitere Alternative sieht vor, dass der aus dem Seitenraum ausgeleitete Dampf einem Kondensator zugeführt wird, von wo aus das kondensierte flüssige Medium zur Bildung eines Kühl-Kreislaufs einem Sammelbehälter zugeführt wird, aus dem das dem Seitenraum zugeführte Medium entnommen wird. Bei der Anwendung des Kühl-Kreislaufs kann der Dampf beispielsweise vorteilhaft zur Prozesskühlung eingesetzt werden.

Mit der erfindungsgemäßen Axialturbomaschine ist es auch möglich, bei transientem Betrieb - zum Beispiel bei einem Neustart mit bereits durchwärmter Axialturbomaschine - den Seitenraum durch das Einblasen von Heißdampf partiell aufzuwärmen. Dadurch können die vorzuhaltenden Radialspalte generell kleiner gewählt werden, da die Radialspalte nicht mehr für diesen ungünstigen Betriebszustand ausgelegt werden müssen. Vorzugsweise wird als Flüssigkeit Wasser, insbesondere demineralisiertes Wasser verwendet, was der Bildung von Ablagerungen, wie beispielsweise Kesselstein, entgegenwirkt.

Um bei der Axialturbomaschine besonders effizient die eingebrachte Flüssigkeit zum Verdampfen zu bringen, sind zur Zuführung des flüssigen Mediums Einspritzdüsen vorgesehen, die im Seitenraum münden. Eine vergleichsweise einfache Konstruktion einer Axialturbomaschine sieht vor, dass die Strömungskanalbegrenzung mehrere Ringsegmente umfasst, die gemeinschaftlich die kreisförmige Strömungskanalbegrenzung bilden. Einen besonderen Vorteil bringt die Verwendung einer Schicht aus einem abrasiven Material an der den Schaufelspitzen zugewandeten Seite der Strömungskanalbegrenzung. Durch die Verwendung der abrasiven Schicht können Ovalität und 3D-Effekte zusätzlich kompensiert werden. Durch eine neue, geeignete Ausführung der Abriebschicht als Wärmeisolation mit einer geringen thermischen Wärmeleitung kann der benötigte Kühlmedium-Bedarf deutlich reduziert werden.

Gemäß einer weiteren vorteilhaften Ausgestaltung ist die Strömungskanalbegrenzung und der daran angrenzende Seitenraum gemeinschaftlich über mehrere, durch in einem Ringgehäuse angeordnete verstellbare Stützelemente koaxial zur Maschinenachse der Axialturbomaschine verschieblich gelagert.

Zweckmäßigerweise kann die Axialturbomaschine entweder als Verdichter, als Verdichter einer Gasturbine, als Turbineneinheit einer Gasturbine oder als Dampfturbine ausgestaltet sein.

Weitere Vorteile und Merkmale der Erfindung ergeben sich aus der nachfolgenden Beschreibung der Zeichnung. In dieser sind mehrere Ausführungsbeispiele dargestellt.

Im Detail zeigen:
- Figur 1: einen Querschnitt durch eine Axialturbomaschine mit einem Ringgehäuse und einer darin angeordneten Strömungskanalbegrenzung, welche am Ringgehäuse über radiale Stützen federnd gelagert ist,
- Figur 2: den Querschnitt durch eine Axialturbomaschine analog zu Figur 1, mit tangential an der Strömungskanalbegrenzung angreifenden Trägerelementen,
- Figur 3 - 5: den Längsschnitt durch eine Strömungspfadbegrenzung und einen Seitenraum.

Die Erfindung wird anhand eines axial durchströmten Verdichters näher erläutert, wobei dieses Ausführungsbeispiel lediglich stellvertretend für eine beliebige Axialturbomaschine steht.

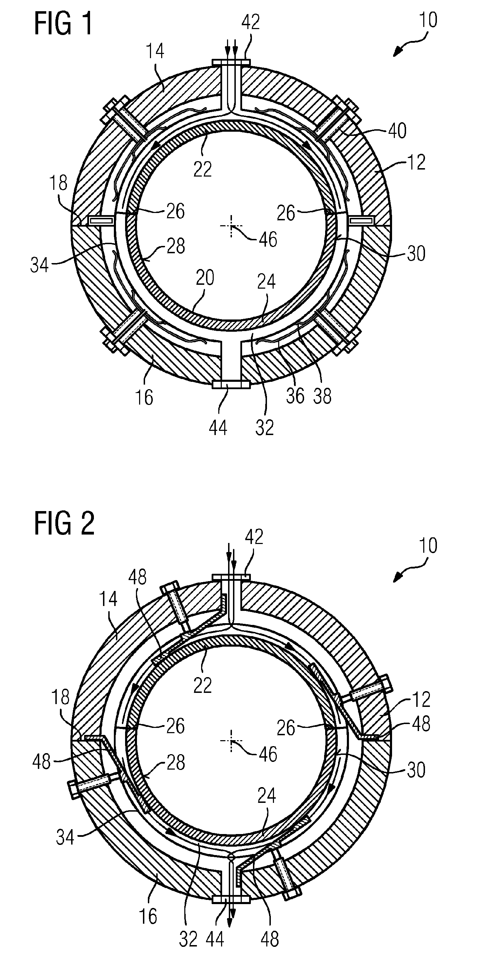

Figur 1 zeigt den Querschnitt durch die Axialturbomaschine 10 im axialen Abschnitt eines Laufschaufelkranzes. Aus Gründen der Übersichtlichkeit sind weder der Rotor noch die Laufschaufeln des Laufschaufelkranzes dargestellt. Der Verdichter umfasst ein äußeres Ringgehäuse 12, welches aus einer oberen Gehäusehälfte 14 und einer unteren Gehäusehälfte 16 gebildet wird. Im Bereich einer Teilungsebene 18 liegen die beiden Hälften 14, 16 flächig aneinander und sind über bekannte, jedoch nicht weiter dargestellte Flanschverbindungen fest miteinander verschraubt. Im Inneren des Ringgehäuses 12 ist eine Strömungspfadbegrenzung 20 angeordnet, die in gleichartiger Weise aus zwei Ringsegmenten gebildet ist, einem oberen Ringsegment 22 und einem unteren Ringsegment 24. Im dargestellten Ausführungsbeispiel weist das untere Ringsegment 24 eine etwas größere Bogenlänge auf als das obere Ringsegment 22. Die beiden Ringsegmente 22, 24 stoßen in zwei Kontaktbereichen 26 aneinander und sind dort flanschartig miteinander verschraubt. Die dem Inneren zugewandte Seite 28 der Strömungspfadbegrenzung 20 bildet die Begrenzung für das im Verdichter strömende Arbeitsmedium. An der äußeren Seite 30 der Strömungskanalbegrenzung ist ein Seitenraum 32 angesiedelt, welcher seinerseits radial außen von einer dünnwandigen Hülle 34 begrenzt wird. Die Strömungspfadbegrenzung 20 und die Hülle 34 sind starr miteinander verbunden. Beide gemeinsam werden über vier Paare von Blattfedern 36, 38 getragen, die ihrerseits über radial verstellbare Stützelemente 40 am Ringgehäuse 12 gehalten sind. Über einen Zugang 42 ist dem Seitenraum 32 ein flüssiges Medium, das vorzugsweise demineralisiertes Wasser ist, zuführbar, welches im Betrieb nach Eintritt in den Seitenraum 32 zumindest teilweise verdampft. Der entstandene Dampf kann danach über die Entnahme 44 entnommen und anschließend weiter genutzt werden. Durch die Verdampfung des flüssigen Mediums kann die Temperatur der Strömungskanalbegrenzung zusätzlich zur "natürlichen", d.h. durch die Umgebungstemperatur bedingte Abkühlung gesenkt werden. Aufgrund dessen schrumpft die Strömungskanalbegrenzung, so dass die kreisförmige Kontur der Strömungskanalbegrenzung einen geringeren Durchmesser aufweist als ohne Kühlung. Die von dieser thermischen Maßnahme nicht beeinflussten Laufschaufeln liegen dann mit einem geringen Spaltmaß der Strömungspfadbegrenzung gegenüber, was zum gewünschten Effekt führt.

Aufgrund der vier über den Umfang gleichmäßig verteilten verstellbaren Stützelemente 40 ist zudem die Strömungspfadbegrenzung 20 in besonders einfacher Art und Weise gegenüber der Maschinenachse 46 positionierbar, so dass mit Hilfe dieser verstellbaren Stützelemente 40, über den Umfang gesehen, gleichmäßig große Spaltmaße eingestellt werden können.

Figur 2 zeigt eine zu Figur 1 ähnliche Ausgestaltung. Jedoch sind anstelle der vier Paare von Blattfedern vier tangential an der Rückseite der Strömungskanalbegrenzung 20 angreifende Trägerelemente 48 angesiedelt, wodurch erneut die Strömungskanalbegrenzung 20 federnd am Ringgehäuse 12 gelagert ist. Die Trägerelemente 48 arbeiten selbstzentrierend, so dass ohne konstruktiven Aufwand alle Radialspalte eines Schaufelkranzes nahezu identische Spaltmaße aufweisen.

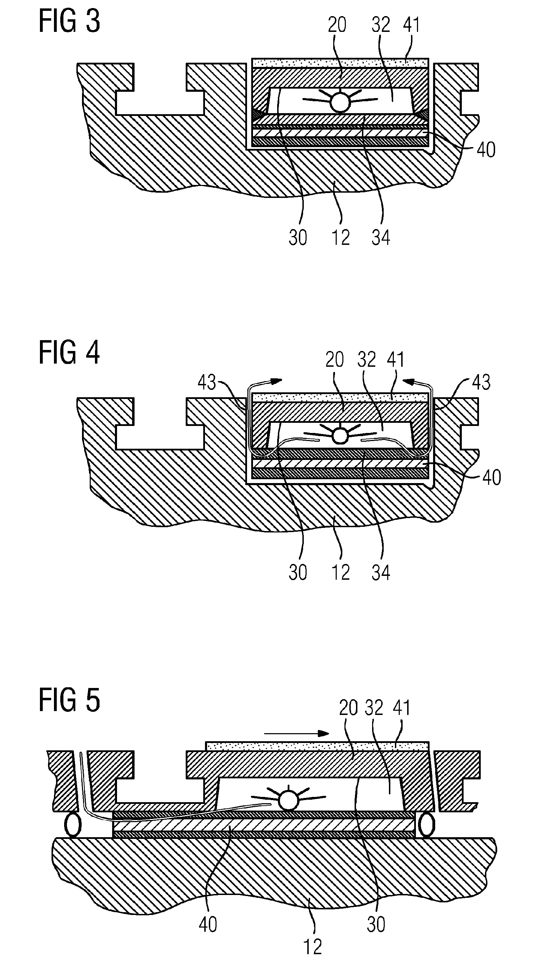

Die Figuren 3 bis 5 zeigen drei unterschiedliche Ausführungsformen der in Figur 1 als Schnitt A-A dargestellten Anordnung.

Die Ausgestaltung gemäß Figur 3 zeigt den Schnitt durch die Strömungspfadbegrenzung 20, der in radialer Position über dem Verdichterlaufrad liegt. Die Flüssigkeit wird über die Zuführung 42 zu diesem Verdichterabschnitt geführt und über nicht dargestellte Düsen in den Seitenraum 32 eingedüst. Die durch die Eindüsung entstehenden nebelartigen Tropfen verdampfen aufgrund der im Betrieb des Verdichters dort auftretenden Temperatur, so dass an allen benetzten Oberflächen besonders effizient die im Material befindliche Wärme abgesenkt und abgeführt werden kann. Dies hat zur Folge, dass sich dieser Gehäuseabschnitt nicht so stark ausdehnt wie andere Bauteile des Verdichters. Deshalb wird die ringförmige Strömungskanalbegrenzung 20 relativ zu den ungekühlten Bauteilen schrumpfen, wodurch der Spalt zwischen den Laufschaufeln und der Strömungspfadbegrenzung 20 sich verkleinert.

An der den Laufschaufeln zugewandten Seite der Strömungspfadbegrenzung 20 ist eine abrasive Schicht 41 vorgesehen, welche die Strömungspfadbegrenzung 20 bei Kontakt vor Verschleiß schützt. Zudem isoliert diese den axialen Gehäuseabschnitt vor der Temperatur im Strömungskanal. Nach Figur 3 ist der Seitenraum 32 hermetisch gegenüber dem Strömungskanal abgedichtet.

Gemäß der Ausgestaltung nach Figur 4 ist der Seitenraum 32 außenseitig geöffnet, so dass das im Seitenraum 32 verdampfende oder verdunstende Wasser über dafür vorgesehene Spalte 43 in den Strömungspfad der Axialturbomaschine 10 eindringen kann. Für Verdichter wird so eine Art "Wet Compression" realisiert, was insbesondere für hintere Stufen eines Verdichters 10 einer stationären Gasturbine von besonderem Interesse ist, da ansonsten an dieser axialen Position des Verdichters 10 nur verhältnismäßig aufwändig Wasser oder Wasserdampf eingebracht werden kann. Gemäß dieser Ausgestaltung führt der zusätzliche Massenstrom zu einer Leistungssteigerung der mit diesem Verdichter 10 ausgestatteten stationären Gasturbine. In der in Figur 5 dargestellten Ausgestaltung erfolgt die Zufuhr des im Seitenraum 32 entstandenen Dampfes in den Strömungskanal etwas stromauf einer Leitbeschaufelung, so dass das in den Strömungskanal eindringende Dampf- oder Wassergemisch auch an einem Verdichterleitrad vorbeigeführt wird. Für freistehende Leiträder führt auch dies zu einer Verringerung des Radialspalts, was zu einem zusätzlichen Wirkungsgradgewinn führt.

Insgesamt ermöglicht die vorgeschlagene Lösung es durch Flüssigkeitsverdampfung bzw. -verdunstung in einem Gehäusebauteil, die Wirkungsgradverluste im Verdichter 10 oder auch anderen Axialturbomaschinen zu verringern und bei Verdichtern 10 die Pumpneigung zu verbessern. Dies erfolgt besonders effizient, indem die Verdampfungskälte der Flüssigkeit der unmittelbaren Umgebung Wärmeenergie entzieht. Insbesondere dadurch ist es auch möglich, eine besonders raumsparende Konstruktion anzugeben. Darüber hinaus kann durch eine weitere Spaltanpassung ein zusätzlicher Wirkungsgradgewinn und ein erweiterter Betriebsbereich der gesamten Axialturbomaschine erreicht werden. Die hierin beschriebenen Anordnungen sind mit verhältnismäßig einfachen Mitteln montierbar und im montierten Zustand zudem noch nachjustierbar. Gleichzeitig werden in den Stützelementen 40 die entstehenden thermischen Spannungen in der Halterung vorteilhaft reduziert bzw. kompensiert. Bei gestörter Kühlung kann die Axialturbomaschine mit vergrößerten Spalten ohne ein erhöhtes Betriebsrisiko weiterbetrieben werden, bis die Störung behoben werden kann. Somit ist eine inhärente Fail-Save-Lösung ohne zusätzliche Maßnahmen realisiert.

## Patentansprüche

1. Verfahren zur Radialspalteinstellung zwischen den Spitzen von Schaufeln eines Schaufelkranzes und einer diesen gegenüberliegenden kreisförmigen Strömungspfadbegrenzung (20) in einer Axialturbomaschine (10),
wobei an einer dem Strömungspfad abgewandten Seite (30) der Strömungspfadbegrenzung (20) ein unmittelbar daran angrenzender ringförmiger Seitenraum (32) angesiedelt ist, **gekennzeichnet durch** die Schritte,
dass während des Betriebs der Axialturbomaschine (10) zur radialspalteinstellenden Beeinflussung der thermischen Dehnung der Strömungspfadbegrenzung (20) dem Seitenraum (32) ein flüssiges Medium zugeführt wird, welches aufgrund der im Strömungspfad auftretenden Temperaturen zumindest teilweise verdampft.

2. Verfahren nach Anspruch 1,
bei dem die dem Seitenraum (32) zugeführte Menge an flüssigem Medium je Zeiteinheit von einer Regeleinrichtung zur Einstellung eines Spalt-Sollwerts geregelt wird.

3. Verfahren nach Anspruch 1 oder 2,
bei dem der Dampf aus dem Seitenraum (32) ausgeleitet und in den Strömungspfad eingeleitet wird.

4. Verfahren nach Anspruch 1 oder 2,
bei dem der Dampf aus dem Seitenraum (32) ausgeleitet und einer Einspannungseinheit zugeführt wird.

5. Verfahren nach Anspruch 1 oder 2,
bei dem der Dampf aus dem Seitenraum (32) ausgeleitet und einem Kondensator zugeführt wird, von wo aus das kondensierte flüssige Medium zur Bildung eines geschlossenen Kreislaufs einem Sammelbehälter zugeführt wird, aus dem das dem Seitenraum (32) zuführbare Medium entnommen wird.

6. Axialturbomaschine (10),
mit einem sich in Axialrichtung erstreckenden Strömungspfad,
in dem Spitzen von Schaufeln eines Schaufelkranzes jeweils radialspaltbildend einer kreisförmigen Strömungspfadbegrenzung (20) gegenüberliegen,
wobei an einer dem Strömungspfad abgewandten Seite (30) der Strömungspfadbegrenzung (20) ein unmittelbar daran angrenzender ringförmiger Seitenraum (32) angesiedelt ist, **dadurch gekennzeichnet,**
**dass** zur radialspalteinstellenden Beeinflussung der thermischen Dehnung der Strömungspfadbegrenzung (20) dem Seitenraum (32) ein flüssiges Medium zuführbar ist.

7. Axialturbomaschine (10) nach Anspruch 6,
bei der zur Zuführung des flüssigen Mediums Einspritzdüsen vorgesehen sind, die im Seitenraum (32) münden.

8. Axialturbomaschine (10) nach Anspruch 6 oder 7,
bei der die Strömungskanalbegrenzung (20) mehrere Ringsegmente (22, 24) umfasst.

9. Axialturbomaschine (10) nach Anspruch 6, 7, oder 8, wobei die Strömungskanalbegrenzung (20) an ihrer den Schaufelspitzen zugewandten Seite (28) eine Schicht aus einem abrasiven Material aufweist.

10. Axialturbomaschine (10) nach einem der Ansprüche 6 bis 9,
bei der die Strömungskanalbegrenzung (20) und der Seitenraum (32) gemeinschaftlich innerhalb eines Ringgehäuses (12) federnd gelagert sind.

11. Axialturbomaschine (10) nach einem der Ansprüche 6 bis 9,
bei der die Strömungskanalbegrenzung (20) und der Seitenraum (32) gemeinschaftlich über mehrere, durch in einem Ringgehäuse (12) angeordnete verstellbare Stützelemente koaxial zur Maschinenachse (46) der Axialturbomaschine (10) verschieblich gelagert sind.

12. Axialturbomaschine (10) nach einem der Ansprüche 6 bis 10,
ausgebildet als Verdichter (10), als Verdichter einer Gasturbine, als Turbineneinheit einer Gasturbine oder als Dampfturbine.
